# EUROPÄISCHE PATENTANMELDUNG

(11) **EP 3 211 764 A1**
(43) Veröffentlichungstag der Anmeldung: **30.08.2017**
(21) Anmeldenummer: 16158921.3
(22) Anmeldetag: 07.03.2016
(51) Int. Cl.: H02K 1/24, H02K 1/30

(54) **ROTOR FÜR EINE ELEKTRISCHE ROTIERENDE MASCHINE**

(30) Priorität: 29.02.2016 EP 16157877
(71) Anmelder: Siemens Aktiengesellschaft, 80333 München (DE)
(72) Erfinder: Schmidt, Stefan, 16321 Bernau OT Schönow (DE); Ulbrich, Benjamin Gottfried, 10439 Berlin (DE); Wieschalla, Martin, 12305 Berlin (DE)

(57) **Zusammenfassung**

Die Erfindung betrifft einen Rotor (3) für eine elektrische rotierende Maschine (1), insbesondere eine Synchronmaschine (20), mit einer Welle (5) und mindestens einem Polschuh (7). Um bei einem geringen Aufwand und niedrigen Kosten eine hohe Zuverlässigkeit zu erreichen, wird vorgeschlagen, dass sich zwischen der Welle (5) und dem Polschuh (7) ein Blech (8) befindet, wobei das Blech (8) eine erste Kontaktfläche (12) aufweist, welche mit einer Kontaktfläche (14) des Polschuhs (7) kontaktiert ist, wobei das Blech (8) und der Polschuh (7) aus unterschiedlichen Materialien ausgebildet sind.

## Beschreibung

Die Erfindung betrifft einen Rotor für eine elektrische rotierende Maschine, insbesondere eine Synchronmaschine, mit einer Welle und mindestens einem Polschuh.

Die Erfindung betrifft weiterhin eine elektrische rotierende Maschine, insbesondere eine Synchronmaschine, mit einem derartigen Rotor.

Ferner betrifft die Erfindung ein Verfahren zur Herstellung eines derartigen Rotors.

Ein derartiger Rotor kommt insbesondere bei direktanlaufenden Synchron-Schenkelpolmaschinen mit aufgesetzten Polschuhen zum Einsatz. Aufgesetzte Polschuhe kommen im Wesentlichen bei Großantrieben mit einer Leistung von mindestens 1 Megawatt vor. Zwischen dem Polschuh und der Welle, auf der der Polschuh aufgesetzt wird, bildet sich eine Teilfuge. Bei einem asynchronen Anlauf der Synchron-Schenkelpolmaschine, werden Wirbelströme in die aufgesetzten Polschuhe induziert, wobei insbesondere die Oberfläche der Polschuhe durch die Wirbelströme stark aufgeheizt wird. Im Zuge der Durchwärmung dehnen sich die Polschuhe aus. Die daraus resultierende Querkraft in der Teilfuge wird vornehmlich reibschlüssig gehalten. Wird die Haftreibung überwunden, kommt es zu wärmeinduzierte Relativverschiebung in der Teilfuge zwischen Polschuh und Welle. Eine derartige Relativverschiebung erfolgt zumeist sprunghaft und willkürlich. Die damit einhergehenden Masseverschiebungen wirken sich negativ auf den Wuchtzustand des Rotors aus und gefährden letztlich den Betrieb des Motors.

Die Polschuhe werden bevorzugt mit der Welle durch Schrauben verbunden. Die Haftreibung in der Teilfuge zwischen Polschuh und Welle wird daher von den Vorspannkräften und den Reibwerten bestimmt. Insbesondere die Reibwerte lassen sich durch gezielte Änderung der Materialeigenschaften und Oberflächeneigenschaften der Reibpartner beeinflussen. Aber eine direkte Modifikation der Materialeigenschaften und Oberflächeneigenschaften an den Kontaktflächen ist nur begrenzt möglich, da sich Änderungen am Grundwerkstoff global auf die funktionalen Eigenschaften der Bauteile auswirken. Für lokale Änderungen der Eigenschaften wären Werkzeuge und Maschinen, wie Fräsmaschinen, Öfen, Tauchbäder usw., in entsprechender Größe erforderlich. Folglich ist eine direkte Bearbeitung der Kontaktflächen mit großem technischem und finanziellem Aufwand verbunden.

Aus der Patentschrift US 9,077,223 B2 ist eine elektrische rotierende Maschine mit einem Schenkelpolläufer bekannt, welcher Polkörper aufweist. Die Polkörper sind einstückig aus einer Welle ausgebildet. Die Polschuhe bilden Polköpfe. Jeder Polschuh ist mit einer Vielzahl von Schrauben fest an dem zugehörigen Polkörper verbunden. Jeder Polschuh oder sein entsprechender Polkörper weisen zumindest einem Vorsprung oder eine Ausnehmung auf, um einen kegelförmigen Druckbereich in einem Druckbereich zu begrenzen. Ein kegelförmiger Druckbereich in einem Druckbereich tritt auf, wenn der Polschuh mit den Schrauben an dem entsprechenden Polkörper verbunden ist.

Aus der Offenlegungsschrift DE 44 15 224 A1 ist eine elektrische Maschine mit einem Polrad mit mehreren Polen bekannt, bei der für jeden Pol ein mit dem Joch einstückig verbundener Polschaft mit einer diesen umgebenden Erregerwicklung und einer am Ende des Polschaftes mittels Schrauben befestigten Polschuhanordnung vorgesehen ist. Hierbei soll die Abfangung der bei der Rotation des Polrades auftretenden, auf die Polschuhanordnung und die Erregerwicklung wirkenden Zentrifugalkräfte effektiver gestaltet werden. Zu diesem Zweck umfasst die Polschuhanordnung eine auf den Polschaft aufgeschraubte Halteplatte und einen ausschließlich mit der Halteplatte verschraubten Polschuh. Die durch die Erregerwicklung auftretenden Zentrifugalkräfte werden somit durch die Halteplatte abgefangen.

Der Erfindung liegt die Aufgabe zugrunde, einen Rotor für eine elektrische rotierende Maschine anzugeben, welche, im Vergleich zum Stand der Technik, eine höhere Zuverlässigkeit aufweist und dabei einfach und kostengünstig herzustellen ist.

Diese Aufgabe wird erfindungsgemäß durch einen Rotor für eine elektrische rotierende Maschine, insbesondere eine Synchronmaschine, mit einer Welle und mindestens einem Polschuh, gelöst, wobei sich zwischen der Welle und dem Polschuh ein Blech befindet, wobei das Blech eine erste Kontaktfläche aufweist, welche mit einer Kontaktfläche des Polschuhs kontaktiert ist und wobei das Blech und der Polschuh aus unterschiedlichen Materialien ausgebildet sind.

Die Aufgabe wird weiterhin durch eine elektrische rotierende Maschine, insbesondere eine Synchronmaschine, mit einem derartigen Rotor gelöst.

Weiterhin wird die Aufgabe gelöst durch ein Verfahren zur Herstellung eines Rotors für eine elektrische rotierende Maschine, insbesondere eine Synchronmaschine, wobei die elektrische rotierende Maschine eine Welle, einen Polschuh und ein Blech aufweist, wobei das Blech zwischen dem Polschuh und der Welle eingelegt wird, wobei eine erste Kontaktfläche des Blechs mit einer Kontaktfläche des Polschuhs kontaktiert wird, wobei das Blech und der Polschuh aus unterschiedlichen Materialien hergestellt werden.

Die in Bezug auf den Rotor nachstehend angeführten Vorteile und bevorzugten Ausgestaltungen lassen sich sinngemäß auf die elektrische rotierende Maschine und das Verfahren übertragen.

Unter einem Blech ist ein flaches Walzwerkprodukt, insbesondere aus einem metallischen Material, mit einer Dicke von wenigen Millimetern zu verstehen.

Unter unterschiedlichen Materialien wird hierbei verstanden, dass das Material des Blechs, zumindest im Bereich der ersten Kontaktfläche des Blechs, eine andere Zusammensetzung (beispielsweise ein anderer Werkstoff) oder andere physikalische oder mechanische Eigenschaften (beispielsweise Härte, Permeabilität, elektrische oder thermische Leitfähigkeit, Verformbarkeit oder Oberflächenrauigkeit) als das Material des Polschuhs aufweist.

Durch das Einsetzen eines Bleches in die Teilfuge zwischen der Welle und dem Polschuh (das Blech wird weiterhin auch Teilfugenblech genannt) kann beispielsweise eine lokale Modifikation der Materialeigenschaften und/oder Oberflächeneigenschaften im Bereich der Kontaktflächen des Teilfugenblechs, bevorzugt hinsichtlich der Reibwerte, vorgenommen werden, ohne Änderungen an dem Polschuh und an der Welle selbst durchführen zu müssen. Durch eine derartige Modifikation der Materialeigenschaften und/oder Oberflächeneigenschaften wird einer wärmeinduzierten Relativverschiebung zwischen Polschuh und Welle einfach und kostengünstig entgegengewirkt. Durch die Verwendung eines derartigen Rotors wird die Zuverlässigkeit, insbesondere im Betrieb mit asynchronem Anlauf, verbessert.

Bevorzugt weist die erste Kontaktfläche des Blechs eine größere Oberflächenrauigkeit als die Kontaktfläche des Polschuhs auf. Durch eine größere Oberflächenrauigkeit wird der Haftreibungskoeffizient zwischen den Kontaktflächen erhöht, wodurch eine Relativverschiebung erschwert wird.

Zweckdienlicherweise weist die erste Kontaktfläche des Blechs eine Oberflächenrauigkeit von mehr als 25 µm, insbesondere im Bereich von 60 µm bis 80 µm, auf. Eine derartige Oberflächenrauigkeit kann beispielsweise durch Raustrahlen erreicht werden. Erfahrungsgemäß hat sich eine derartige Oberflächenrauigkeit als besonders vorteilhaft erwiesen.

In besonders vorteilhafter Weise ist das Blech aus einem härteren Material ausgebildet als der Polschuh. Dies ist vorteilhaft, da sich beispielsweise das insbesondere aufgeraute Blech aus dem härteren Material mit dem weicheren Material des Polschuhs bei entsprechendem Anpressdruck verklammert, wodurch eine Relativverschiebung zwischen den kontaktierten Oberflächen erschwert wird.

Vorzugsweise ist das Blech aus einem Federstahl mit einer Härte von mindestens 650 HV, insbesondere 700 HV, ausgebildet. Es wird insbesondere ein gehärteter Federstahl des Typs C75S verwendet. Dies ist vorteilhaft, da die hohe Härte beispielsweise eine stabile Verklammerung ermöglicht.

Bei einer weiteren vorteilhaften Ausgestaltung weist das Blech eine Dicke von mindestens 2 mm, insbesondere ca. 5 mm, auf. Erfahrungsgemäß hat sich eine derartige Dicke als besonders vorteilhaft erwiesen.

Bei einer bevorzugten Ausführungsform ist die erste Kontaktfläche des Blechs vollflächig mit der Kontaktfläche des Polschuhs kontaktiert. Durch die Maximierung der Kontaktfläche werden der magnetische Fluss und die thermische Kontaktierung des Polschuhs an der Welle optimiert.

Bevorzugt weist das Blech eine zweite Kontaktfläche auf, welche mit einer Kontaktfläche der Welle kontaktiert ist, wobei die zweite Kontaktfläche des Blechs eine größere Oberflächenrauigkeit als die Kontaktfläche der Welle aufweist. Dies ist vorteilhaft, da somit keine zusätzlichen Maßnahmen erforderlich sind, um das Blech mit der Welle zu kontaktieren.

Auf besonders vorteilhafte Weise ist das Blech über eine formschlüssige und/oder kraftschlüssige Verbindung, insbesondere über ein Verbindungselement, mit der Welle kontaktiert. Eine Erwärmung, beispielsweise verursacht durch Wirbelströme bei einem asynchronen Anlauf, findet primär auf der Oberfläche der Polschuhe statt. Da sich die Welle nicht so stark erwärmt und sich deshalb nicht signifikant ausdehnt, kann das Blech mit der Welle beispielsweise über eine einfache und kostengünstige Schraubverbindung befestigt werden.

In besonders vorteilhafter Weise ist das Blech über eine stoffschlüssige Verbindung, insbesondere über eine Schweißverbindung, mit der Welle verbunden. Beispielsweise wird das Blech über ein Diffusionsschweißverfahren mit der Welle verbunden. Dies ist vorteilhaft, da eine derartige Schweißverbindung eine große mechanische und thermische Stabilität aufweist.

Im Folgenden wird die Erfindung anhand der in den Figuren dargestellten Ausführungsbeispiele näher beschrieben und erläutert.

Es zeigen:
- FIG 1: eine dreidimensionale Darstellung einer ersten Ausführungsform eines Rotors,
- FIG 2: einen Querschnitt einer ersten Ausführungsform eines Rotors,
- FIG 3: einen vergrößerten Ausschnitt einer zweiten Ausführungsform eines Rotors im Querschnitt,
- FIG 4: einen vergrößerten Ausschnitt einer dritten Ausführungsform eines Rotors im Querschnitt und
- FIG 5: einen Querschnitt einer elektrischen rotierenden Maschine.

Gleiche Bezugszeichen haben in den verschiedenen Figuren die gleiche Bedeutung.

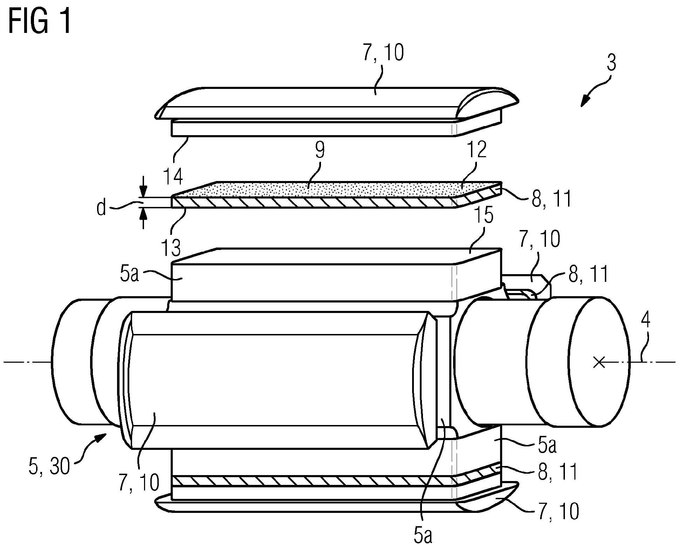

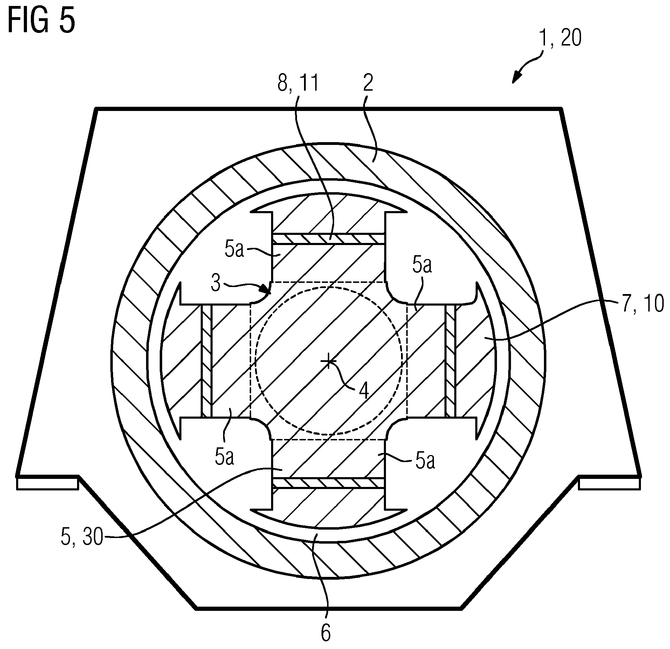

FIG 1 zeigt eine dreidimensionale Darstellung einer ersten Ausführungsform eines Rotors 3. Der Rotor 3 ist um eine Rotationsachse 4 rotierbar, wobei die Rotationsachse 4 eine axiale Richtung und eine radiale Richtung definiert. Der Rotor 3, welcher für eine direktanlaufende Synchron-Schenkelpolmaschine (wie in FIG 5 dargestellt) mit einer Maximalleistung von mindestens 1 Megawatt geeignet ist, weist eine Welle 5 mit exemplarisch vier orthogonal angeordneten Schenkelpolen 5a auf, wobei die Schenkelpole 5 mit Polschuhen 7 versehen sind. Die Polschuhe 7 bestehen aus einem ersten Material 10, insbesondere aus einem weichmagnetischen Stahl, insbesondere aus einem Vergütungsstahl. Die Welle 5 mit den vier Schenkelpolen 5a ist aus einem massiven Vollmaterial hergestellt und besteht im gezeigten Ausführungsbeispiel aus einem dritten Material 30, bevorzugt aus einem weichmagnetischen Stahl. Das erste Material 10 der Polschuhe 7 kann dem dritten Material 30 der Welle 5 entsprechen.

Zwischen jedem Polschuh 7 und der Welle 5 befindet sich jeweils ein Blech 8, welches in axiale Richtung parallel zur Rotationsachse 4 verläuft. Das Blech 8 weist eine erste Kontaktfläche 12 und eine zweite Kontaktfläche 13 auf, wobei im gezeigten Ausführungsbeispiel die erste Kontaktfläche 12 vollflächig auf einer Kontaktfläche 14 des Polschuhs 7 aufliegt und wobei die zweite Kontaktfläche 13 vollflächig auf einer Kontaktfläche 15 der Welle 5 aufliegt. Das Blech 8 weist eine näherungsweise konstante Dicke von mindestens 2 mm, insbesondere von ca. 5 mm, auf und besteht aus einem zweiten Material 11, welches härter als das erste Material 10 und vorzugsweise auch härter als das dritte Material 30 ist. Bevorzugt wird als zweites Material 11 ein gehärteter Federstahl C75s mit einer Härte im Bereich von 650 HV, insbesondere 700 HV, verwendet. Eine derartige Härte wird erreicht, indem durch Härten und Anlassen eine Vergütung durchgeführt wird.

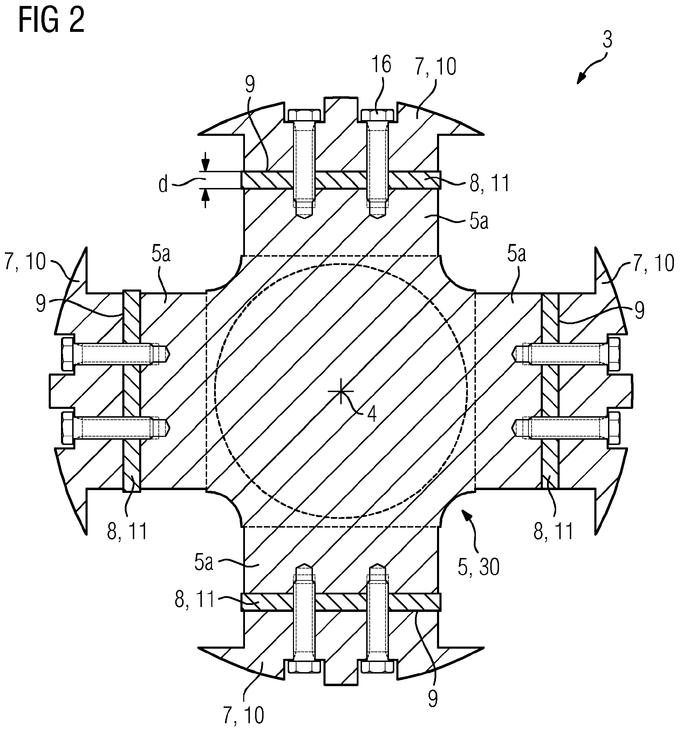

Die Polschuhe 7 werden mit Hilfe von als Schrauben ausgeführten Verbindungselementen 16 (siehe FIG 2 bis FIG 4) auf die Welle 5 geschraubt, wobei das Blech 8 zwischen der Welle 5 und den Polschuhen 7 aufliegt und wobei die Schrauben 16 durch das Blech 8 verlaufen. Die Schrauben 16 sowie die für den Betrieb des Rotors 3 erforderlichen Polwicklungen sind aus Gründen der Übersichtlichkeit nicht dargestellt.

Bei einem asynchronen Anlauf werden Wirbelströme in die Polschuhe 7 induziert, wobei insbesondere die Oberfläche der Polschuhe 7 durch die Wirbelströme stark aufgeheizt wird, wodurch sich der Polschuh 7 ausdehnt. Um eine von der Ausdehnung verursachte Verschiebung des Polschuhs 7 zur Welle 5 zu vermeiden, weisen die Kontaktflächen 12, 13 des Blechs 8 eine Aufrauhung 9 auf, wobei die Oberflächenrauigkeit der Kontaktflächen 12, 13 bei mehr als 25 µm, insbesondere im Bereich von 60 µm bis 80 µm, liegt. Durch die größere Oberflächenrauigkeit wird der Haftreibungskoeffizient zwischen den sich berührenden Kontaktflächen 12, 14; 13, 15 erhöht. Eine derartige Aufrauhung 9 wird beispielsweise mittels Raustrahlen mit einem Strahlgut, beispielsweise mit Partikel, erreicht. Alternativ können die Kontaktflächen 12, 13 durch Schleifen, Prägen, Rändeln und/oder Fräsen derartig strukturiert werden, dass sich der Haftreibungskoeffizient zwischen den sich berührenden Kontaktflächen 12, 14; 13, 15 erhöht. Das Blech 8 wird hergestellt indem nach dem Vergüten durch Härten und Anlassen zumindest auf der ersten Kontaktfläche 12 die Aufrauhung 9 aufgebracht wird.

Die aufgerauten Kontaktflächen 12, 13 des Blechs 8 aus dem härteren zweiten Material 11 verklammern sich durch einen entsprechenden Anpressdruck, welcher durch die Verschraubung erzeugt wird, mit dem weicheren ersten Material 10 des Polschuhs 7 und dem weicheren dritten Material 30 der Welle 5.

FIG 2 zeigt einen Querschnitt einer ersten Ausführungsform eines Rotors 3. Es sind Verbindungselemente 16, insbesondere Schrauben, dargestellt, welche in radiale Richtung durch die Bleche 8 verlaufen und die Polschuhe 7 zusammen mit den Blechen 8 an der Welle 5 befestigen. Die übrige Ausführung des Rotors 3 entspricht der aus FIG 1.

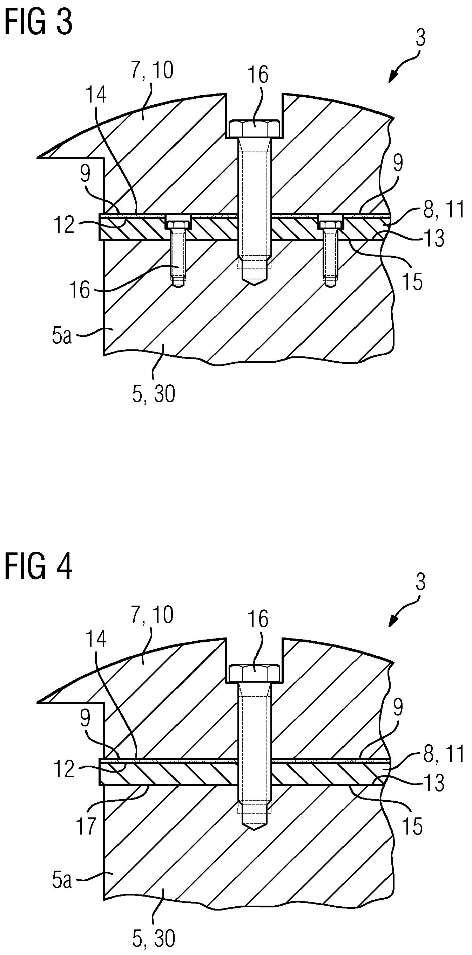

FIG 3 zeigt einen vergrößerten Ausschnitt einer zweiten Ausführungsform eines Rotors 3 im Querschnitt. Die erste Kontaktfläche 12 des Blechs 8 weist, wie in FIG 1 beschrieben eine Aufrauhung 9 auf, um die Reibung zwischen dem Blech 8 und dem Polschuh 7 zu erhöhen. Mit der Welle 5 hingegen ist das Blech 8 über Verbindungselemente 16, insbesondere Schrauben, verbunden, sodass die zweite Kontaktfläche 13 auf der Kontaktfläche 15 der Welle 5 aufliegt. Die übrige Ausführung des Rotors 3 entspricht der aus FIG 1.

FIG 4 zeigt einen vergrößerten Ausschnitt einer dritten Ausführungsform eines Rotors 3 im Querschnitt. Die Ausführungsform in FIG 4 unterscheidet sich von der Ausführungsform in FIG 3 dadurch, dass die zweite Kontaktfläche 13 über eine stoffschlüssige Verbindung 17 mit der Kontaktfläche 15 der Welle 5 verbunden ist. Eine derartige stoffschlüssige Verbindung 17 wird insbesondere über eine Schweißverbindung, beispielsweise mittels Diffusionsschweißen, hergestellt.

FIG 5 zeigt einen Querschnitt einer elektrischen rotierenden Maschine 1, welche als Synchronmaschine 20 ausgeführt ist. Die Synchronmaschine 20, welche mit einer Leistung von mindestens 1 Megawatt betreibbar ist, weist einen Rotor 3 gemäß einer der vorherigen Figuren auf. Weiterhin weist die Synchronmaschine 20 einen den Rotor 3 umgebenden Stator 2 auf, wobei sich zwischen dem Rotor 3 und dem Stator 2 ein Luftspalt 6 befindet. Die Spulen des Stators 2 und des Rotors 3 sind aus Gründen der Übersichtlichkeit nicht dargestellt.

## Patentansprüche

1. Rotor (3) für eine elektrische rotierende Maschine (1), insbesondere eine Synchronmaschine (20),
mit einer Welle (5) und mindestens einem Polschuh (7) **dadurch gekennzeichnet, dass**
sich zwischen der Welle (5) und dem Polschuh (7) ein Blech (8) befindet,
wobei das Blech (8) eine erste Kontaktfläche (12) aufweist, welche mit einer Kontaktfläche (14) des Polschuhs (7) kontaktiert ist,
wobei das Blech (8) und der Polschuh (7) aus unterschiedlichen Materialien ausgebildet sind.

2. Rotor (3) nach Anspruch 1,
wobei die erste Kontaktfläche (12) des Blechs (8) eine größere Oberflächenrauigkeit als die Kontaktfläche (14) des Polschuhs (7) aufweist.

3. Rotor (3) nach einem der Ansprüche 1 oder 2,
wobei die erste Kontaktfläche (12) des Blechs (8) eine Oberflächenrauigkeit von mehr als 25 µm, insbesondere im Bereich von 60 µm bis 80 µm, aufweist.

4. Rotor (3) nach einem der Ansprüche 1 bis 3,
wobei das Blech (8) aus einem härteren Material ausgebildet ist als der Polschuh (7).

5. Rotor (3) nach einem der Ansprüche 1 bis 4,
wobei das Blech (8) aus einem Federstahl mit einer Härte von mindestens 650 HV, insbesondere 700 HV, ausgebildet ist.

6. Rotor (3) nach einem der Ansprüche 1 bis 5,
wobei das Blech (8) eine Dicke (d) von mindestens 2 mm, insbesondere 5 mm, aufweist.

7. Rotor (3) nach einem der Ansprüche 1 bis 6,
wobei die erste Kontaktfläche (12) des Blechs (8) vollflächig mit der Kontaktfläche (14) des Polschuhs (7) kontaktiert ist.

8. Rotor (3) nach einem der Ansprüche 1 bis 7,
wobei das Blech (8) eine zweite Kontaktfläche (13) aufweist, welche mit einer Kontaktfläche (15) der Welle (5) kontaktiert ist,
wobei die zweite Kontaktfläche (13) des Blechs (8) eine größere Oberflächenrauigkeit als die Kontaktfläche (15) der Welle (5) aufweist.

9. Rotor (3) nach einem der Ansprüche 1 bis 7,
wobei das Blech (8) über eine formschlüssige und/oder kraftschlüssige Verbindung, insbesondere über ein Verbindungselement (16), mit der Welle (5) kontaktiert ist.

10. Rotor (3) nach einem der Ansprüche 1 bis 7,
wobei das Blech (8) über eine stoffschlüssige Verbindung (17), insbesondere über eine Schweißverbindung, mit der Welle (5) verbunden ist.

11. Elektrische rotierende Maschine (1), insbesondere eine Synchronmaschine (20), mit einem Rotor (3) nach einem der Ansprüche 1 bis 10.

12. Verfahren zur Herstellung eines Rotors (3) für eine elektrische rotierende Maschine (1), insbesondere eine Synchronmaschine (20),
wobei die elektrische rotierende Maschine (1) eine Welle (5), einen Polschuh (7) und ein Blech (8) aufweist,
wobei das Blech (8) zwischen dem Polschuh (7) und der Welle (5) eingelegt wird,
wobei eine erste Kontaktfläche (12) des Blechs (8) mit einer Kontaktfläche (14) des Polschuhs (7) kontaktiert wird, wobei das Blech (8) und der Polschuh (7) aus unterschiedlichen Materialien hergestellt werden.

13. Verfahren nach Anspruch 12,
wobei für die erste Kontaktfläche (12) des Blechs (8) eine größere Oberflächenrauigkeit als für die Kontaktfläche (14) des Polschuhs (7) eingestellt wird.

14. Verfahren nach einem der Ansprüche 12 oder 13,
wobei für die erste Kontaktfläche (12) des Blechs (8) eine Oberflächenrauigkeit größer als 25 µm, insbesondere im Bereich von 60 µm bis 80 µm, eingestellt wird.

15. Verfahren nach einem der Ansprüche 12 bis 14,
wobei für das Blech (8) ein härteres Material als für den Polschuh (7) gewählt wird.

16. Verfahren nach einem der Ansprüche 12 bis 15,
wobei das Blech (8) aus einem Federstahl mit einer Härte von mindestens 650 HV ausgebildet wird.

17. Verfahren nach einem der Ansprüche 12 bis 16,
wobei für das Blech (8) eine Dicke (d) von mindestens 2 mm gewählt wird.

18. Verfahren nach einem der Ansprüche 12 bis 17,
wobei die erste Kontaktfläche (12) des Blechs (8) vollflächig mit der Kontaktfläche (14) des Polschuhs (7) kontaktiert wird.

19. Verfahren nach einem der Ansprüche 12 bis 18,
wobei das Blech (8) eine zweite Kontaktfläche (13) aufweist, wobei für die zweite Kontaktfläche (13) des Blechs (8) eine größere Oberflächenrauigkeit als für eine Kontaktfläche (15) der Welle (5) eingestellt wird.

20. Verfahren nach einem der Ansprüche 12 bis 19,
wobei das Blech (8) im Bereich der zweiten Kontaktfläche (13) über eine formschlüssige und/oder kraftschlüssige Verbindung, insbesondere über ein Verbindungselement (16), mit der Welle (5) kontaktiert wird.

21. Verfahren nach einem der Ansprüche 12 bis 20,
wobei die zweite Kontaktfläche (13) des Blechs (8) über eine stoffschlüssige Verbindung (17), insbesondere über eine Schweißverbindung, mit der Welle (5) verbunden wird.
